Europäisches Patentamt

**European Patent Office**

Office européen des brevets

(19)

(11) Numéro de publication: **0 201 379**
**B1**

(12) **FASCICULE DE BREVET EUROPEEN**

(45) Date de publication du fascicule du brevet:
**12.09.90**

(51) Int. Cl.⁵: **F27B 3/06, C21C 5/52**

(21) Numéro de dépôt: 86400738.0

(22) Date de dépôt: **07.04.86**

(54) Procédé et système de pilotage en basculement d'un récipient basculant contenant du métal liquide.

(30) Priorité: 05.04.85 FR 8505275

(43) Date de publication de la demande:
**17.12.86 Bulletin 86/46**

(45) Mention de la délivrance du brevet:
**12.09.90 Bulletin 90/37**

(84) Etats contractants désignés:
**AT BE DE FR GB IT NL SE**

(56) Documents cités:
EP-A- 0 128 965
FR-A- 1 223 903
FR-A- 1 376 856
FR-A- 2 218 397

(73) Titulaire: VALLOUREC Société Anonyme dite., 7, place
du Chancelier Adenauer, F-75116 Paris(FR)

(72) Inventeur: Dubreux, Eric, 12 Impasse Guilick,
F-59600 Maubeuge(FR)
Inventeur: Benoit, Guy, 7 Rue Chateaubriand,
F-59880 Saint-Sauive(FR)
Inventeur: Blum, Jacques, 10 Résidence des Charmes
Famars, F-59300 Valenciennes(FR)

(74) Mandataire: Rinuy, Santarelli, 14, avenue de la Grande
Armée, F-75017 Paris(FR)

ACTORUM AG

## Description

La présente invention concerne la régulation d'un débit de métal liquide depuis un premier récipient vers un second récipient. Elle s'applique notamment à la régulation du débit d'une masse de'acier liquide se déversant d'un four basculant, de type généralement électrique, dans une poche de coulée.

Jusqu'à présent, dans les aciéries, le basculement d'un four à arc électrique lors d'une coulée est contrôlé de façon visuelle manuelle : un opérateur pilote "à vue" une valve de régulation d'un débit hydraulique alimentant des vérins de manoeuvre en basculement du four.

Une telle procédure se révèle conduire à des variations par à-coups de l'inclinaison du four et de brusques variations dans le débit d'écoulement de l'acier; des mouvements intempestifs de l'ensemble de la masse d'acier contenue dans le four peuvent en outre, à la manière de vagues, amener l'acier en contact avec des éléments de refroidissement disposés à la partie supérieure du four, d'où des risques d'explosion.

L'invention a ainsi pour objet une commande automatique des opérations de basculement, l'opérateur n'ayant plus alors qu'un rôle de surveillance.

Une telle automisation du basculement a pour avantage de ne plus requérir d'intervention humaine qu'en cas de défaillance d'un système de pilotage destiné à cette automatisation. En outre le débit d'écoulement d'acier peut être régulé avec souplesse et précision, voire maintenu constant, tandis que la masse de métal contenue dans le four peut être préservée de toute turbulence intempestive (les risques d'explosion précités peuvent ainsi être limités). La durée de la coulée en poche peut par ailleurs être bien maîtrisée ce qui est très avantageux pour ce qui est de la mise en poche d'additions de traitement de tout type approprié. Il est à noter que la maîtrise des conditions de coulée permet notamment de maintenir dans une gamme acceptable la quantité de laitier qui passe en poche. Dans le cas par exemple d'un four à arc du type proposé par la demande de brevet FR-2.535.835, adapté à une coulée "par le fond" à la faveur d'un trou de coulée obturable ménagé dans le fond d'une partie radialement saillante du four, une automatisation du basculement permet de maintenir une hauteur de métal sensiblement constante au dessus de ce trou de coulée, ce qui est apparu nécessaire pour éviter l'apparition d'un phénomène parasite de tourbillon (ou vortex).

On connait déjà, par le document FR 1 376 856, un procédé pour vider automatiquement d'un creuset basculable de métaux en fusion, selon lequel diverses phases préprogrammées sont déclenchées par un capteur qui détecte l'apparition ou la disparition du jet de coulée, et par un capteur adapté à détecter la fin du remplissage d'un moule ou lingotière (ou poche de coulée) lorsque le métal déversé atteint soit un niveau prédéterminé, soit une masse prédéterminée. Mais ce document ne propose pas de réelle régulation permanente de débit.

L'invention a également pour objet de procurer ces avantages d'une manière simple et fiable, permettant une exploitation et une maintenance aisées.

L'invention a encore pour objet de permettre de manière aisée de déterminer avec précision le moment où le four doit être redressé en sorte de couler dans la poche une quantité prédéterminée de métal.

L'invention propose à cet effet, dans une définition très large, un procédé de pilotage en basculement d'un récipient basculant contenant une masse de métal liquide en vue d'un déversement contrôlé de cette masse, caractérisé en ce que l'on asservit une première grandeur représentative de la position angulaire du récipient basculant par rapport à une position de référence à une second grandeur représentative du poids de métal déversé à un moment donné selon une loi de consigne donnant l'évolution de cette seconde grandeur de fonction du temps, cette loi étant prédéterminée ou déterminable d'une manière prédéterminée.

Il convient de noter que l'invention permet de satisfaire les avantages précitées même lorque, dans le cas d'une coulée d'acier, il s'agit de manipuler une masse très importante (pouvant atteindre voire dépasser une centaine de tonnes ) portée à une température très élevée (supérieure à 1500°C).

Selon les dispositions préférées de l'invention, les paramètres de consigne sont définis lors d'une phase initiale du déversement; dans une version avantageusement simplifiée de l'invention la loi de consigne est de type linéaire; le récipient basculant est de préférence redressé lorsque le poids de la quantité de métal déversé atteint un seuil prédéterminé. La grandeur représentative du poids de la quantité de métal déversé à un moment donné est, de manière préférée, une mesure de ce poids lui-même tandis que la grandeur représentantive de la position angulaire du récipient basculant est avantageusement une grandeur caractéristique de la configuration des organes de manoeuvres de ce récipient.

L'invention propose en outre un dispositif de pilotage d'un récipient basculant contenant une masse de métal liquide en vue de son déversement avec un débit contrôlé, adapté à la mise en oeuvre du procédé précité, caractérisé en ce qu'il comporte un premier ensemble de mesure sensible à une première grandeur représentative de la position angulaire du récipient basculant, un second ensemble de mesure sensible à une seconde grandeur représentative du poids du second récipient et un dispositif de contrôle et d'asservissement adapté à contrôler la position d'organes de manoeuvre associées au récipient basculant en sorte d'asservir la première grandeur repréesentative à la second grandeur représentative selon une loi de consigne imposant l'évolution au cours du temps de cette seconde grandeur représentative.

Les moyens sensibles à une grandeur représentative du poids de métal déversé à un moment donné sont de préférence consitués par un ensemble de pesage sur lequel repose ledit second récipient tandis que les moyens sensibles à une grandeur représentative de la position angulaire du premier récipient sont avantageusement formés d'un ensemble de détection adapté à relever une grandeur caractéristique de la configuration d'organes de manoeuvre associés audit premier récipient.

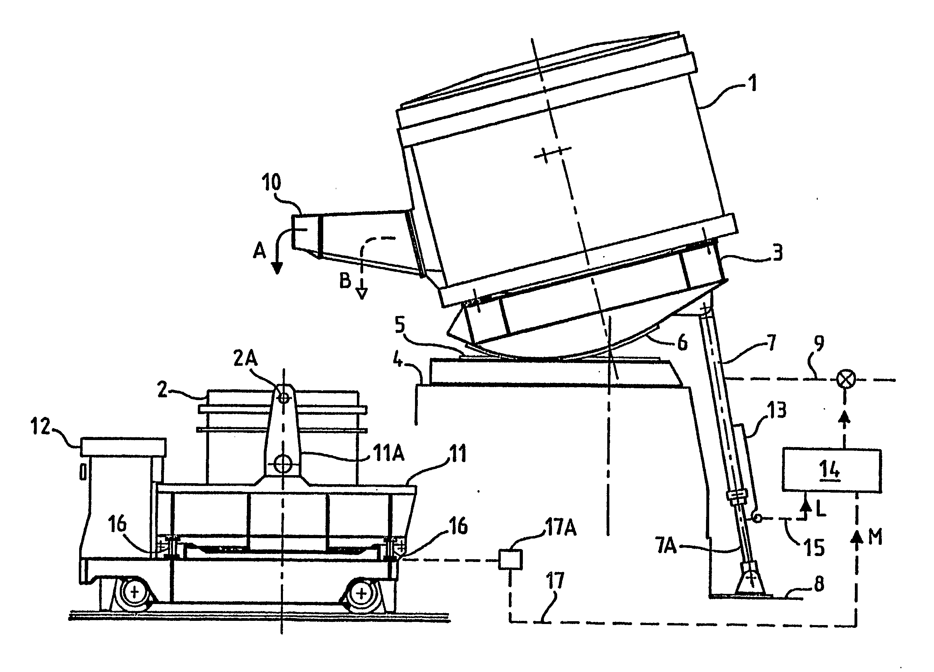

Des objets, caractéristiques et avantages de l'invention ressortent de la description qui suit, donnée à titre d'exemple illustratif non limitatif, en regard du dessin annexé sur lequel la figure unique est une vue schématique en élévation d'un ensemble (four électrique basculant) - (poche de coulée) auquel est appliquée l'invention.

Cette figure unique représente un four basculant (1) contenant une masse de métal en fusion (non représentée), telle qu'un bain d'acier, qu'il s'agit de déverser ou couler dans une poche (2).

Le four basculant (1) comporte une embase convexe (3) adaptée à rouler sans glisser sur un socle (4) grâce, en pratique, à des moyens complémentaires d'engrenage (5) et (6), tels que des crémaillères, montés respectivement sur le socle (4) et sous l'embase (3).

Le four (1) est commandé en basculement par des organes de manoeuvre constitués par des vérins (7) articulés sur l'embase (3) et comportant un piston (7A) dont l'extrémité libre est articulée au sol (8). A chaque vérin (7) parvient une canalisation d'amenée de fluide hydraulique de commande (schématisée par une ligne (9) en tiretés) qui fait partie d'un circuit d'alimentation hydraulique (non représenté).

Le four (1) comporte une partie latéralement saillante (10) telles qu'un bec verseur par lequel la masse de métal fondu peut s'écouler dans la poche (2) selon la flèche (A). Le bec verseur peut être de tout type connu avec par exemple une rigole se raccordant à la paroi latérale du corps du four sous un orifice de taille appropriée (non représenté) ménagé dans cette paroi. Selon une variante non représentée, la partie latéralement saillante constitue une sorte d'excroissance latérale de la paroi latérale du four munie, dans une paroi inférieure comme le propose par exemple le document FR-2.535.835 précité, d'un orifice de coulée doté d'un mécanisme d'obturation autorisant un écoulement de la masse de métal en fusion du type schématisé par la flèche (B) en tiretés.

La poche (2) dans laquelle aboutit le jet de métal fondu provenant de cette partie saillante (10) est supportée par un berceau (11) muni de deux bras verticaux (11A) dans lesquels sont reçus des tourillons (2A) disposés en saillie à la partie supérieure de la poche (2). Le berceau est en pratique chargé sur un chariot mobile (12).

Ces dispositions classiques, sont du domaine de la compétence d'un homme du métier et ne seront pas détaillées plus avant.

Selon l'invention un premier ensemble de mesure est associé au four basculant (1) en sorte de relever à chaque instant une grandeur (L) représentative de la position angulaire de ce four (définie par rapport à une position ou une orientation de référence) tandis qu'un second ensemble de mesure est associé à la poche (2) en sorte de relever à chaque instant une grandeur (M) représentative de la quantité de métal liquide déjà déversé; ces ensembles de mesure sont connectés à un dispositif de contrôle et d'asservissement adapté à prendre en compte des signaux de mesure provenant desdits ensembles de mesure et, par action sur le circuit d'alimentation hydraulique des vérins (7), au moyen de vannes de régulation par exemple, à asservir la grandeur représentative de la position angulaire à la grandeur représentative du poids de métal déjà déversé selon une loi de consigne préétablie indiquant l'évolution au cours du temps de cette grandeur représentative du poids.

Dans l'exemple considéré à la figure unique, l'un au moins des vérins (7) est avantageusement muni d'un capteur d'extension à enrouleur (13) comportant de façon classique un potentiomètre délivrant au dispositif (14) de contrôle et d'asservissement, par une ligne (15), un signal représentatif de l'extension instantanée dudit vérin. Un système de pesage (16) est par ailleurs disposé entre le berceau (11) et la plate-forme du chariot (12) sur laquelle repose ce berceau; ce système est par exemple constitué de capteurs électroniques de pesage de type classique, adaptés à délivrer au dispositif (14) de conrôle et d'asservissement, selon une ligne (17) un signal représentatif du poids du berceau, de la poche (2) et de la quantité de métal déjà déversée dans cette dernière; compte tenu du caractère mobile du chariot (12) et du berceau (11), et donc du système de pesage (16), la ligne (17) de liaison de ce système de pesage au dispositif (14) de contrôle et d'asservissement comporte un tronçon fix, relié à ce dispositif (14), et un tronçon amovible, relié au système (16) et adapté à être connecté ou déconnecté du tronçon fixe par un élément de raccordement (17A).

Le dispositif (14) de contrôle et d'asservissement comporte en pratique des moyens de calcul, tels qu'un micro-ordinateur dans lequel ont été introduites, outre un programme d'asservissement, des informations concernant la loi de consigne précitée. Les informations peuvent consister en des données permettant une reconsitution point par point de cette loi de consigne; elle est alors prédéterminée.

L'invention préconise toutefois que cette loi de consigne soit introduite au préalable dans les moyens de calcul sous la forme d'une fonction mathématique de type prédéterminé (par exemple de type linéaire). Si ses paramètres sont prédéterminés la loi est elle-même prédéterminée. Les paramètres de cette loi sont avantageusement redéfinis de façon empirique, selon une méthode préétablie, au début de chaque nouveau cycle de remplissage d'une poche; la loi de consigne est alors déterminable d'une manière prédéterminée.

Dans l'exemple considéré l'invention propose ainsi la suite d'opérations suivantes, pour chaque cycle de remplissage d'une poche.
- éventuelle pré-inclinaison du four basculant selon un angle donné en évitant ou empêchant tout déversement de métal;
- début de coulée à un instant donné avec un basculement contrôlé progressif obéissant à des indications préétablies (par exemple selon une vitesse angulaire constante du four, ou selon une vitesse constante d'extension des vérins); ce basculement peut être supprimé en cas de coulée par le fond;
- mesure de la variation de poids $\Delta$ M enregistrée

par le système de pesage (16) au cours d'un intervalle de temps donné Δt;
- détermination complète de la loi de consigne dont la forme mathématique a été préalablement stockée; dans le cas d'une loi linéaire correspondant à un remplissage de la poche à un débit constant, la pente de cette loi est donnée par le rapport ΔM/Δt;
- après cette phase intermédiaire, mesures successives du poids et comparaison de celles-ci à des valeurs calculées à partir de la loi de consigne, et correction appropriée du débit d'alimentation des vérins dans un sens adapté à réduire l'amplitude de l'écart constaté;
- comparaison de ces mesures successives du poids à un seuil de poids maximum et commande ou rétraction des vérins pour redresser le four basculant;
- contrôle de la cinétique de redressement du four en sorte de suivre une loi cinétique préétablie, correspondant de préférence à une vitesse angulaire variant avec l'angle instantané d'inclinaison (d'abord rapide, puis lente, par exemple).

Lorsque les grandeurs représentatives du poids de métal versé et de l'inclinaison du four ne sont pas celles qui sont proposées dans l'exemple qui vient d'être décrit, les détails de la procédure automatique à suivre se déduisent aisément de ce qui précède.

Pour des raisons de sécurité l'invention préconise en outre que l'on teste en permanence la vraisemblance des couples de valeur que prennent à chaque instant les deux grandeurs représentatives considérées. Cette vraisemblance est en pratique surveillée par comparaison avec des séries de couples de valeur recueillies au cours d'essais préalables d'étalonnage.

Il va de soi que la description qhi précède n'a été proposée qu'à titre indicatif non limitatif et que de nombreuses variantes peuvent être proposées par l'homme de l'art sans sortir du cadre de l'invention. Aussi la grandeur représentatives de l'inclinaison instantanée du four basculant peut être choisie égale à cette inclinaison elle-même (avec mise en oeuvre de tous moyens de mesure appropriés). D'autre part la grandeur représentative du poids déjà déversé dans la poche peut être prise égale à (ou représentative de) la dérivée de ce poids (dont on stocke des valeurs successives au cours du temps pour calculer le poids lui-même), ou encore la hauteur de métal dans la poche. Enfin du point de vue sécurité, il peut être préféré de vérifier la vraisemblance de l'évolution au cours du temps de la grandeur représentative du poids de métal déversé.

A titre d'exemple d'application de l'invention à une coulée d'acier en poche, la contenance du four est de 85 tonnes environ, et le déversement de cette masse au travers d'un orifice de coulée de 180 mm. de diamètre ménagé dans la partie saillante du four s'effectue à un débit d'environ une tonne/s. L'intervalle de temps correspondant à la détermination de la pente de la loi linéaire de consigne est d'environ 5 secondes (pour une inclinaison donnée du four) ce qui est une durée suffisamment faible pour permettre la détermination d'une valeur exploitable et vraisemblable de la pente de la loi de consigne.

A titre d'exemple plus précis, la procédure de pilotage en basculement d'un four, selon une loi linéaire, s'opère comme suite :
- vérification de ce qu'une poche 2 est en place,
- préréglage de la vitesse de basculement du four (référence fix en fonctionnement automatique, réglage manuel par potentiomètre en fonction du diamètre du trou en fonctionnement semi-automatique),
- affichage du poids voulu en poche PP par exemple sur roues codeuses,
- vérification de ce que PP enregistré est bien compris entre deux bornes possible (par exemple 70 et 95 t),
-ouverture du clapet de coulée,
- blocage des interruptions,
- mémorisation de la tare-chariot TA et de PP,
- verrouillage du clapet ouvert,
- poids minimum en poche (5t par exemple),
- armement d'une temporisation (T2),
- lecture du poids P1 et mémorisation,
- déclenchement de la temporisation (T2 = 10s par exemple),
- lecture du poids P2,
- calcul du poids d'échantillonnage $PE = (P2 - P1) \times n/500$, $\underline{n}$ étant le nombre de 1/100 s programmés pour l'échantillonnage, puis mémorisation de PE,
- lecture du poids théorique P et calcul de bornes $P+ = P+x$ et $P- = P-x$ (x étant une valeur d'écart admissible par rapport à la courbe théorique, à régler lors d'essais),
- déblocage des interruptions,
- cycles itératifs au cours desquels : on mesure (et on affiche) le poids en poche PT - TA (PT étant le poids total), on le compare au poids désiré (s'il y a égalité on remonte le four) puis on surveille un compteur ; lorsque ce dernier arive à $\underline{n}$, on provoque une interruption, on rajoute PE aux précédentes valeurs P+ et P-, on mesure le poids Pn et on le compare aux nouvelles valeurs P+ et P- ; si Pn est compris entre cas valeurs, on arrête l'interruption et on commence un nouveau cycle avec remise à zéro du compteur ; sinon on actionnne des relais adaptés à agir sur le potentiomètre de référence d'un équipement de commande de la valve proportionnelle commandant le vérin 7, dans un sens adapté à augmenter ou réduire le débit, selon le cas, puis on arrête l'interruption et on commence un nouveau cycle avec remise à zéro du compteur.

Les relais sont par exemple montés en parallèle sur des potentiomètres montés en série entre deux bornes de potentiel de part et d'autre du potentiomètre de référence de l'équipement de commande précité. Selon que le relais "supérieur" ou "inférieur" s'ouvre, le potentiel de référence diminue ou augmente.

**Revendications**

1. Procédé de pilotage en basculement d'un récipient basculant contenant une masse de métale liquide en vue d'un déversement contrôlé de cette masse, dans lequel on asservit (14) une première grandeur (L) représentative de la position angulaire du récipient basculant par rapport à une position de référence à une second grandeur (M) représentative du poids de métal déversé à un moment donné selon une loi de consigne donnant l'évolution de cette seconde grandeur en fonction du temps, cette loi étant prédéterminée ou déterminable d'une manière prédéterminée.

2. Procédé selon la revendication 1, caractérisé en ce que la loi de consigne est déterminée au cours d'une phase initiale du déversement, par identification des paramètres d'une fonction mathématique de type imposé, à partir de la mesure de la variation de la second grandeur représentative (M) pendant un intervalle de temps prédéterminé.

3. Procédé selon la revendication 1 ou la revendication 2, caractérisé en ce que cette loi de consigne est de type linéaire, ce qui correspond à un débit constant de déversement de métal.

4. Procédé selon l'une quelconque des revendications 1 à 3, caractérisé en ce que l'on commande un redressement du four basculant (1) lorsque ladite seconde grandeur prédéterminée atteint un seuil prédéterminé.

5. Procédé selon l'une quelconque des revendications 1 à 4, caractérisé en ce que l'on teste en permanence la vraisemblance des couples de valeurs prises par les première et seconde grandeurs représentatives par référence à une série de couples de valeurs préalablement déterminés par étalonnage.

6. Procédé selon l'une quelconque des revendication 1 à 5, caractérisé en ce que ladite seconde grandeur représentative (M) est le poids de métal déversé.

7. Procédé selon l'une quelconque des revendications 1 à 5, caractérisé en ce que ladite seconde grandeur représentative est la dérivée en fonction du temps du poids de métal déversé.

8. Procédé selon l'une quelconque des revendications 1 à 7, caractérisé en ce que ladite première grandeur représentative (L) est une grandeur caractéristique de la configuration instantanée d'organes de manoeuvre associé au récipient basculant.

9. Dispositif de pilotage en basculement d'un récipient basculant contenant une masse de métal liquide en vue de déversement de cette masse dans un second récipient (2) à un débit contrôlé, comportant un premier ensemble de mesure (13) sensible à une première grandeur représentative de la position angulaire du récipient basculant, un second ensemble de mesure (16) sensible à une seconde grandeur représentative du poids du second récipient (2) et un dispositif (14) de contrôle et d'asservissement adapté à contrôler la position d'organes de manoeuvre (7) associés au récipient basculant en sorte d'asservir la première grandeur représentative à la seconde grandeur représentative selon une loi de consigne imposant l'évolution au cours du temps de cette seconde grandeur représentative.

10. Dispositif selon la revendication 9, caractérisé en ce que le premier ensemble de mesure (13) est sensible à la position instantanée desdits organes de manoeuvre (7) associés au récipient basculant.

11. Dispositif selon la revendication 9 ou 10, caractérisé en ce que le second ensemble de mesure (16) comporte des éléments de pesage embarqués sur un chariot (12).

## Claims

1. A method of controlling the tilting movement of a tilting receptacle containing a mass of liquid metal, for controlled discharge of the said mass, wherein a first magnitude (L), representing the angular position of the tilting receptacle with respect to a reference position, is compared (14) with a second magnitude (M), representing the weight of metal discharged at a given instant, in accordance with a governing relationship giving the variation of the said second magnitude as a function of time, the said relationship being predetermined, or capable of being established in a predetermined manner.

2. A method according to Claim 1, characterised in that the governing relationship is established in the course of an initial phase of the discharging operation, by identification of the parameters in a mathematical function of a prescribed type, being derived from the measurement of the variation in the second representative magnitude (M) during a predetermined time interval.

3. A method according to Claim 1 or Claim 2, characterised in that the said governing relationship is of a linear type which corresponds to a discharge of the metal at a constant rate.

4. A method according to any one of Claims 1 to 3, characterised in that a righting movement of the tilting furnace (1) is effected when the said second predetermined magnitude reaches a predetermined threshold value.

5. A method according to any one of Claims 1 to 4, characterised in that the verisimilitude of the pairs of values assumed by the first and second representative magnitudes is continuously tested with reference to a series of pairs of values determined in advance by calibration.

6. A method according to any one of Claims 1 to 5, characterised in that the said second representative magnitude (M) is the weight of discharged metal.

7. A method according to any one of Claims 1 to 5, characterised in that the said second representative magnitude is the derivative of the weight of discharged metal as a function of time.

8. A method according to any one of Claims 1 to 7, characterised in that the said first representative magnitude (L) is a magnitude which is characteristic of the instantaneous configuration of manipulating members associated with the tilting receptacle.

9. Apparatus for controlling the tilting movement of a tilting receptacle containing a mass of liquid metal, whereby to discharge the said mass into a second receptacle (2) at a controlled rate, comprising a first measuring means (13) which is responsive to a first magnitude representing the angular position of the tilting receptacle, a second measuring means (16) responsive to a second magnitude representing the weight of the second receptable (2), and a control and comparing device (14) which is adapted for controlling the position of manoeuvring members (7) associated with the tilting receptacle, whereby to compare the first representative magnitude with the second representative magnitude in accordance with a governing relationship prescribing the variation of the said second representative magnitude with time.

10. Apparatus according to Claim 9, characterised in that the first measuring means (13) is responsive to the instantaneous position of the said manoeuvring members (7) associated with the tilting receptacle.

11. Apparatus according to Claim 9 or Claim 10, characterised in that the second measuring means (16) includes weighing elements carried on a carriage (12).

## Patentansprüche

1. Verfahren zur Steuerung des Kippvorganges eines eine Masse flüssigen Metalls enthaltenden Kippbehälters zur Erzielung eines kontrollierten Ausgießens dieser Masse, bei dem man eine erste für die Winkelposition des Kippbehälters repräsentative Größe (L) in bezug auf eine Bezugsposition nach einer zweiten Größe (M) regelt (14), die für das Gewicht des ausgegossenen Metalls zu einem nach einem Einstellgesetz gegebenen Moment repräsentativ ist, das die Entwicklung dieser zweiten Größe als Funktion der Zeit angibt, und das auf eine vorherbestimmte Weise vorherbestimmt ist oder bestimmt werden kann.

2. Verfahren nach Anspruch 1, dadurch gekennzeichnet, daß das Einstellgesetz während einer Anfangsphase des Ausgießens durch Ermittlung der Parameter einer zugeordneten mathematischen Funktion ausgehend von der Messung der Änderung der zweiten repräsentativen Größe (M) während eines vorherbestimmten Zeitintervalls bestimmt wird.

3. Verfahren nach Anspruch 1 oder 2, dadurch gekennzeichnet, daß das Einstellgesetz vom linearen Typ ist, was einer konstanten Ausgießmenge von Metall entspricht.

4. Verfahren nach einem der Ansprüche 1 bis 3, dadurch gekennzeichnet, daß ein Geraderichten des Kippofens (1) ausgelöst wird, wenn die zweite vorherbestimmte Größe eine vorherbestimmte Schwelle erreicht.

5. Verfahren nach einem der Ansprüche 1 bis 4, dadurch gekennzeichnet, daß die Wahrscheinlichkeit der Wertpaare, die durch die erste und zweite repräsentative Größe erhalten werden, in bezug auf eine Serie von Wertpaaren ständig geprüft wird, die vorher durch Eichung bestimmt wurden.

6. Verfahren nach einem der Ansprüche 1 bis 5, dadurch gekennzeichnet, daß die zweite repräsentative Größe (M) das Gewicht des ausgegossenen Metalls ist.

7. Verfahren nach einem der Ansprüche 1 bis 5, dadurch gekennzeichnet, daß die zweite repräsentative Größe die Ableitung des Gewichts des ausgegossenen Metalls nach der Zeit ist.

8. Verfahren nach einem der Ansprüche 1 bis 7, dadurch gekennzeichnet, daß die erste repräsentative Größe (L) eine charakteristische Größe der momentanen Konfiguration von mit dem Kippbehälter verbundenen Bedienungsorganen ist.

9. Einrichtung zur Steuerung des Kippvorganges eines eine Masse flüssigen Metalls enthaltenden Kippbehälters zur Erzielung eines kontrollierten Ausgießens dieser Masse in einen zweiten Behälter (2), mit einer ersten Meßeinheit (13), die auf eine erste, für die Winkelposition des Kippbehälters repräsentative Größe anspricht, einer zweiten Meßeinheit (16), die auf eine zweite, für das Gewicht des zweiten Behälters (2) repräsentative Größe anspricht, und einer Kontroll- und Regeleinrichtung (14), die zur Kontrolle von mit dem Kippbehälter verbundenen Bedienungsorganen (7) eingerichtet ist, um die erste repräsentative Größe nach der zweiten repräsentativen Größe gemäß einem Einstellgesetz zu regeln, das die zeitliche Entwicklung der zweiten repräsentativen Größe bestimmt.

10. Einrichtung nach Anspruch 9, dadurch gekennzeichnet, daß die erste Meßeinheit (13) auf die momentane Position der mit dem Kippbehälter verbundenen Bedienungsorgane (7) anspricht.

11. Einrichtung nach Anspruch 9 oder 10, dadurch gekennzeichnet, daß die zweite Meßeinheit (16) auf einem Wagen (12) angeordnete Wiegeelemente umfaßt.